# EUROPEAN PATENT APPLICATION

(11) **EP 4 033 588 A1**
(43) Date of publication of application: **27.07.2022**
(21) Application number: 20889633.2
(22) Date of filing: 29.10.2020
(51) Int. Cl.: H01M 10/6556, H01M 10/6554, H01M 10/653, H01M 10/613, H01M 10/625

(54) **BATTERY MODULE AND BATTERY PACK INCLUDING SAME**

(30) Priority: 22.11.2019 KR 20190151596; 03.07.2020 KR 20200082054
(71) Applicant: LG ENERGY SOLUTION, LTD., Seoul 07335 (KR)
(72) Inventor: JUNG, Kitaek, Daejeon 34122 (KR); SEONG, Junyeob, Daejeon 34122 (KR); KIM, Younggil, Daejeon 34122 (KR)
(74) Representative: Plasseraud IP
(86) International application number: PCT/KR2020/014959
(87) International publication number: WO 2021/101114

(57) **Abstract**

A battery module according to an embodiment of the present invention may include a battery cell laminated body in which a plurality of battery cells are stacked, a lower plate to which the battery cell laminated body is disposed, and a module frame coupled to the lower plate. The lower plate may include two side parts facing each other and an upper part connecting the two side parts to cover three surfaces of the battery cell laminated body. A cooling path may be formed on the lower plate.

## Description

### CROSS-REFERENCE TO RELATED APPLICATION

This application is a national phase entry under International Application No. PCT/KR2020/014959 filed on October 29, 2020, which claims priority to and the benefit of Korean Patent Application No. 10-2019-0151596 filed in the Korean Intellectual Property Office on November 22, 2019, and Korean Patent Application No. 10-2020-0082054 filed in the Korean Intellectual Property Office on July 03, 2020, the entire disclosures of all of which are hereby incorporated by reference herein.

### [Technical Field]

The present invention relates to a battery module and a battery pack including the same, and more specifically, to a battery module in which a structure for heat dissipation is improved more simply and efficiently, and a battery pack including the same.

### [Background Art]

Rechargeable batteries having high application characteristics and electrical characteristics such as high energy density according to their products are widely applied to battery vehicles, hybrid vehicles, and electric power storage devices driving electric driving sources as well as portable devices. These rechargeable batteries are attracting attention as new energy sources for improving environmental-friendliness and energy efficiency in that they do not generate any by-products of energy use as well as their primary merit, in which they can drastically reduce the use of fossil fuels.

In small mobile devices, one, two, or three battery cells are used per device, while medium and large devices such as automobiles require high power/large capacity. Therefore, a medium-to-large battery module in which a plurality of battery cells are electrically connected is used.

Since it is preferable for medium and large battery modules to be manufactured with as small a size and weight as possible, a prismatic battery and a pouch-type battery, which may have a high integration degree and have a small weight with respect to capacity, are mainly used as a battery cell of the medium and large battery modules.

On the other hand, when a battery pack is configured by coupling a plurality of battery cells in series or in parallel, a general method is to first configure a battery module composed of at least one battery cell, and then add other constituent elements by using at least one battery module to configure a battery pack.

In the case of such a battery module, as the required battery capacity increases, importance of a technology capable of efficiently cooling heat generated from the battery cell is gradually increasing. In particular, although a configuration for heat dissipation is included in the battery module itself, since the heat dissipation is not sufficient by this configuration alone, an additional heat dissipation means is sometimes provided in the battery pack unit. However, in this case, since the configuration for the heat dissipation is overlapped and included, there are problems in that the structure is complicated, and the efficiency of the heat dissipation is also deteriorated.

### [Disclosure]

### [Technical Problem]

The problem to be solved by the present invention is to provide a battery module and a battery pack capable of simplifying and increasing efficiency of the entire structure by simplifying the structure for the heat dissipation.

However, tasks to be solved by embodiments of the present invention may not be limited to the above-described task, and may be extended in various ways within a range of technical scopes included in the present invention.

### [Technical Solution]

A battery module according to an embodiment of the present invention includes: a battery cell laminated body in which a plurality of battery cells are stacked; a lower plate to which the battery cell laminated body is disposed; and a module frame coupled to the lower plate and including two side parts facing each other and an upper part connecting two side parts to cover three surfaces of the battery cell laminated body, and in which a cooling path is formed on the lower plate.

The battery module may further include a thermally conductive resin layer formed between the lower plate and the battery cell laminated body.

The cooling path may include an inlet connected to the outside at one side of the lower plate, and an outlet connected to the outside at the other side facing the one side.

The cooling path may be connected throughout the entire lower plate between the inlet and the outlet.

The thermally conductive resin layer may be in direct contact with the lower plate and the battery cell laminated body.

The lower plate may be of a flat plate type.

The cooling path may be formed by extrusion when forming the lower plate of a flat type.

A battery pack according to another embodiment of the present invention may include at least one battery module as described above, and a pack case for packing at least one battery module.

The lower plate of the at least one battery module may be fixed to the pack case, and the pack case may be in a form of a flat plate.

The battery pack may further include a connection part that connects the cooling paths formed in each of the battery modules to communicate with each other.

The connection part may be formed of a flexible material.

A device according to another embodiment of the present invention may include at least one battery pack as described above.

### [Advantageous Effects]

According to embodiments, it is possible to increase the efficiency thereof in the battery module while simplifying the heat dissipation structure. In addition, even in the battery pack including such a battery module, heat may be sufficiently discharged without an additional heat dissipation means of the battery pack unit, thereby simplifying the structure of the battery pack.

### [Description of the Drawings]

FIG. 1 is an exploded perspective view showing a battery module according to an embodiment of the present invention.
FIG. 2 is a schematic view showing an internal structure of a lower plate of the battery module of FIG. 1.
FIG. 3 is a cross-section view taken along a z-axis direction of the battery module of FIG. 1.
FIG. 4 is a perspective view showing a battery pack according to another embodiment of the present invention.
FIG. 5 is a top view of the battery pack of FIG. 4.

### [Mode for Invention]

The present invention will be described more fully hereinafter with reference to the accompanying drawings, in which embodiments of the invention are shown. As those skilled in the art would realize, the described embodiments may be modified in various different ways, all without departing from the spirit or scope of the present invention.

Descriptions of parts not related to the present invention are omitted, and like reference numerals designate like elements throughout the specification.

Further, since sizes and thicknesses of constituent members shown in the accompanying drawings are arbitrarily given for better understanding and ease of description, the present invention is not limited to the illustrated sizes and thicknesses. In the drawings, the thickness of layers, films, panels, regions, etc., are exaggerated for clarity. In the drawings, for better understanding and ease of description, the thicknesses of some layers and areas are exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, in the specification, the word "on" or "above" means positioned on or below the object portion, and does not necessarily mean positioned on the upper side of the object portion based on a gravitational direction.

In addition, unless explicitly described to the contrary, the word "comprise", and variations such as "comprises" or "comprising", will be understood to imply the inclusion of stated elements but not the exclusion of any other elements.

Further, in the specification, the phrase "on a plane" means viewing the object portion from the top, and the phrase "on a cross-section" means viewing a cross-section of which the object portion is vertically cut from the side.

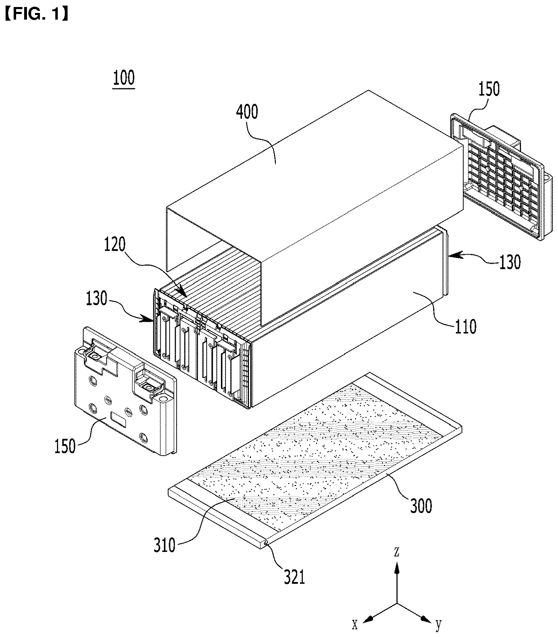

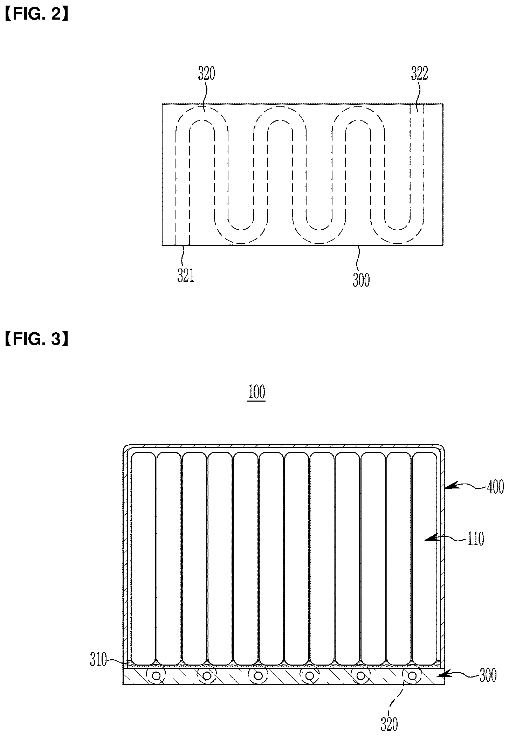

FIG. 1 is an exploded perspective view showing a battery module according to an embodiment of the present invention, FIG. 2 is a view schematically showing an internal structure of a lower plate of a battery module according to an embodiment of the present invention, and FIG. 3 is a view showing a cross-section taken along a z-axis direction in a state where constituent elements of the battery module of FIG. 1 are combined.

Referring to FIG. 1 to FIG. 3, the battery module 100 according to the present embodiment includes a battery cell laminated body 120 including a plurality of battery cells 110, a lower plate 300 in which the battery cell laminated body 120 is disposed, a module frame 400 combined with the lower plate 300 and formed to cover three surfaces of the battery cell laminated body 120 by opening the bottom surface, the front surface, and the rear surface, and an end plate 150 positioned on the front and rear surfaces of the battery cell laminated body 120, respectively.

The module frame 400, as shown in FIG. 1, includes two side parts facing each other and an upper part connecting them to cover three surfaces of the battery cell laminated body. That is, when the opened sides of the module frame 400 are called the first side and the second side, respectively, the module frame 400 is formed of a plate-shaped structure that is bent so as to continuously cover the front, upper, and rear surfaces adjacent to each other among the remaining outer surfaces except for the surfaces of the battery cell laminated body 120 corresponding to the first side and the second side. Here, the portion covering the front and rear surfaces of the battery cell laminated body 120 forms two side parts of the module frame 400 facing each other, and the portion covering the upper surface between them forms the upper part of the module frame 400. The lower surface corresponding to the upper part of the module frame 400 is opened.

The lower plate 300 has a plate-shaped structure corresponding to the lower surface except for the front, upper, and rear surfaces of the battery cell laminated body 120 covered by the module frame 400. The module frame 400 and the lower plate 300 may form a structure surrounding the battery cell laminated body 120 by bonding by welding, etc., while the corresponding corners are in contact with each other. That is, the module frame 400 and the lower plate 300 may be bonded at the corners corresponding to each other by a bonding method such as welding.

The battery cell laminated body 120 includes a plurality of battery cells 110 stacked in one direction, and a plurality of battery cells 110, as shown in FIG. 1, may be stacked in the y-axis direction. The battery cell 110 is preferably a pouch-type battery cell. The electrode lead included in each battery cell 110 is a positive electrode lead or a negative electrode lead, and the end of the electrode lead of each battery cell 110 may be bent in one direction, thereby coming into contact with the end of the electrode lead of another adjacent battery cell 110. Two electrode leads in contact with each other may be fixed to each other through welding or the like, and through this, an electrical connection between the battery cells 110 inside the battery cell laminated body 120 may be made. In addition, the electrode leads aligned at both ends of the battery cell laminated body 120 may be coupled to the bus bar frame 130 to be electrically connected to the bus bar mounted on the bus bar frame 130.

Inside the lower plate 300, a cooling path 320 through which a fluid for cooling may be passed is formed. The cooling path 320, as shown in FIG. 2, includes an inlet 321 connected to the outside at one side of the lower plate 300 and an outlet 322 connected to the outside at the other side facing the one side, and is formed to connect between the inlet 321 and the outlet 322 inside the lower plate 300. As shown in FIG. 2, the cooling path 320 may be formed to reciprocate between one side and the other side to be disposed over the entire lower plate 300, but it is not limited thereto, and if the cooling path 320 has a configuration that may be uniformly disposed on the lower plate 300, it may be appropriately selected.

A thermally conductive resin layer 310 is positioned between the lower plate 300 and the battery cell laminated body 120. The thermally conductive resin layer 310 is made of a material having thermal conductivity that may dissipate heat generated from the battery cell laminated body 120 to the outside, and may be composed of, for example, a thermal resin. Examples of such thermal resins include silicone, urethane, and epoxy.

The thermally conductive resin layer 310 may be formed by coating a thermally conductive resin on the lower plate 300 and then curing it. Particularly, in the present embodiment, since the thermally conductive resin layer 310 is formed by coating a thermally conductive resin on the lower plate 300 of the opened state, compared to a battery module composed of a mono-frame in a form of a square tube, it is possible to easily form the thermally conductive resin layer 310, and particularly, because it is easy to control the amount and position of the thermally conductive resin to be coated, it is possible to prevent excessive injection of the thermal conductive resin during the manufacturing process, which increases manufacturing cost and increases the weight of the battery module. In addition, since the module frame 400 is assembled after confirming that the thermal conductive resin is sufficiently hardened, the occurrence of defects due to non-curing may be minimized.

Before forming the thermally conductive resin layer 310, that is, before the coated thermal conductive resin is cured, as the battery cell laminated body 120 is disposed on the lower plate 300 and then the thermal conductive resin is cured, the battery cell laminated body 120 may be fixed to the lower plate 300. That is, the thermally conductive resin layer 310 may serve to transfer the heat generated from the battery cell 110 to the lower plate 300 and to fix the battery cell laminated body 120.

In the battery module 100 according to the present embodiment, since the cooling path 320 is formed inside the lower plate 300 that is in direct contact with the thermally conductive resin layer 310, the lower plate 300, which has received heat from the thermally conductive resin layer 310, acts as a heat sink by itself, thereby effectively dissipating heat from the resultant battery module 100. Particularly, for such an effect, the sufficient heat dissipation effect may be obtained without a separate heat dissipation pad mounted on the battery module 100 or an additional heat dissipation means provided for a battery pack to be described later.

In addition, since the portion where the cooling path 320 is formed is the lower plate 300 in the form of a flat plate, the forming process of the cooling path 320 may also be simplified. That is, the cooling path 320 may be formed by extruding a metal material such as aluminum constituting the lower plate 300, and when the structure in which the cooling path 320 is integrally formed is a U-shaped or square tubular frame, the forming process of the cooling path 320 may also be complicated. However, in the present embodiment, it is possible to manufacture more easily because the cooling path 320 is formed on the lower plate 300 having a simple shape in the form of a flat plate. That is, when forming the lower plate 300 of the flat shape including the cooling path 320, the size of the mold for realizing this may be reduced, and the structure may be simplified. On the other hand, when trying to form a cooling path in a rectangular tubular monoframe or the part of a U-shaped lower frame, since the structure to be extruded is complicated and large, the mold for implementing this is also designed to be large and complex, and there is a problem in that the manufacturing cost increases and the process becomes complicated.

As described above, according to the battery module 100 according to the present embodiment, heat generated from the battery cell 110 may be efficiently dissipated by a simple structure. In addition, the process of forming the lower plate 300 on which the cooling path 320 is formed and the process of forming the thermally conductive resin layer 310 on the lower plate 300 may be simplified to obtain such a structure, thereby reducing the manufacturing process and cost.

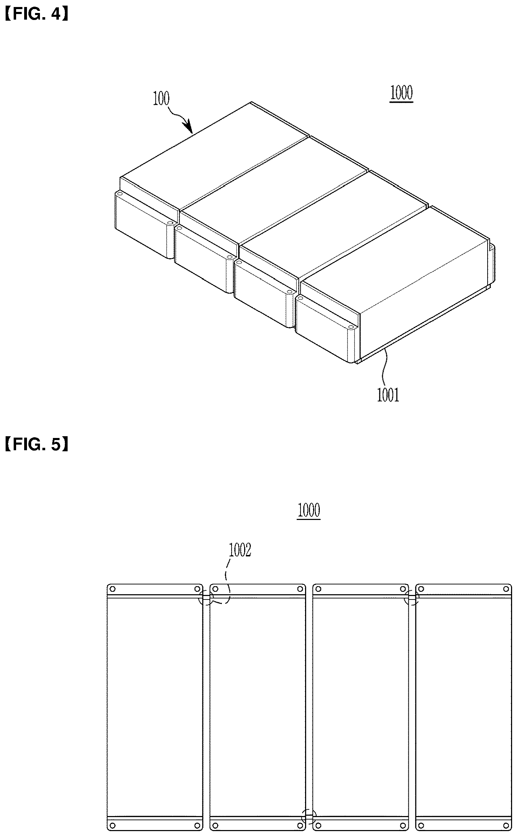

FIG. 4 is a perspective view showing a battery pack according to another embodiment of the present invention, and FIG. 5 is a view showing the battery pack of FIG. 4 from above.

Referring to FIG. 4 and FIG. 5, one or more battery modules according to an embodiment of the present invention may be packaged in the pack case 1001 to form a battery pack 1000.

In the battery pack 1000 according to an embodiment of the present invention, since it is not necessary to further include a separate heat dissipation means, the structure of the pack case 1001, as shown in FIG. 4, may be simplified in the form of a simple flat plate. That is, in the prior art, it was necessary to form an additional cooling path in the pack case 1001 itself in which the battery module 100 is accommodated, or to provide a separate thermal pad under the battery module 100 when the battery module 100 is mounted. However, in the present embodiment, since the cooling path 320 is provided on the lower plate 300 itself on which the battery cell laminated body 120 is mounted in the battery module 100, heat may be sufficiently dissipated without a separate heat dissipation means in the battery pack 1000. Therefore, the structure of the battery pack 1000 may be simplified.

The battery pack 1000 according to the present embodiment includes a connection part 1002 connecting the cooling paths 320 formed in each of a plurality of battery modules 100 included in the battery pack 1000 to communicate with each other. That is, by connecting the outlet 322 of one battery module 100 and the inlet 321 of the adjacent battery module 100 by the connection part 1002, the cooling paths 320 are configured to communicate throughout the battery pack 1000. Accordingly, since the cooling path 320 in the battery module 100 may be connected into one in the battery pack 1000, the heat dissipation effect of the battery pack 1000 may be easily obtained by injecting the cooling fluid into this one cooling path 320.

In this case, the connection part 1002 may be formed of a flexible material, for example, a resin. In this way, a handling may be improved in the process of forming the battery pack 1000 by combining the battery modules 100.

The aforementioned battery module and battery pack including the same may be applied to various devices. The device may be applied to a vehicle such as an electric bicycle, an electric vehicle, or a hybrid vehicle, but the present invention is not limited thereto, and may be applied to various devices that can use a battery module, and this is also included in the scope of the present invention.

While this invention has been described in connection with what is presently considered to be practical embodiments, it is to be understood that the invention is not limited to the disclosed embodiments. On the contrary, it is intended to cover various modifications and equivalent arrangements included within the spirit and scope of the appended claims.

### [Description of Symbols]

- 100:: battery module
- 150:: end plate
- 300:: lower plate
- 400:: module frame
- 320:: cooling path
- 1000:: battery pack

## Claims

1. A battery module comprising:
a battery cell laminated body including a plurality of stacked battery cells;
a lower plate, the battery cell laminated body being mounted on the lower plate; and
a module frame coupled to the lower plate and including two side parts facing each other and an upper part connecting the two side parts to cover three surfaces of the battery cell laminated body,
wherein a cooling path is disposed in the lower plate.

2. The battery module of claim 1, further comprising a thermally conductive resin layer disposed between the lower plate and the battery cell laminated body.

3. The battery module of claim 1, wherein the cooling path includes an inlet connected to one side of the lower plate, and an outlet connected to an opposite side of the lower plate.

4. The battery module of claim 3, wherein the cooling path extends across the lower plate between the inlet and the outlet.

5. The battery module of claim 2, wherein the thermally conductive resin layer is in contact with the lower plate and the battery cell laminated body.

6. The battery module of claim 1, wherein the lower plate is a flat plate.

7. The battery module of claim 6, wherein the cooling path is formed by extrusion when forming the lower plate.

8. A battery pack comprising:
at least one battery module according to claim 1; and
a pack case for packing the at least one battery module.

9. The battery pack of claim 8, wherein the lower plate of the at least one battery module is fixed to the pack case, the pack case being a flat plate.

10. The battery pack of claim 8, further comprising a connection part that connects the cooling paths of each of the battery modules such that the cooling paths are in fluid communication with each other.

11. The battery pack of claim 10, wherein the connection part includes a flexible material.

12. A device comprising at least one battery pack of claim 8.
